# EUROPEAN PATENT APPLICATION

(11) **EP 3 296 139 A1**
(43) Date of publication of application: **21.03.2018**
(21) Application number: 16465536.7
(22) Date of filing: 16.09.2016
(51) Int. Cl.: B60L 3/00, B60L 3/12, B60L 11/12

(54) **POWER INVERTER CONTROLLER OF AN ELECTRICAL MACHINE OF A HYBRID VEHICLE**

(71) Applicant: Continental Automotive GmbH, 30165 Hannover (DE)
(72) Inventor: Patrascu, Daniel, 707313 Iasi (RO)

(57) **Abstract**

The invention relates to a power inverter controller of an electrical machine of a hybrid vehicle, comprising a processor, a temperature sensor, configured to measure a temperature of a power inverter and a memory configured to store information. Wherein the memory comprises a non-volatile storage space and the processor comprises a counter. The processor is configured to increase a value of the counter, if the temperature measured by the temperature sensor is above a predetermined temperature threshold. Further, the processor is configured to store the value of the counter in the non-volatile storage space.

## Description

The invention relates to the field of temperature surveillance by a controller. More specifically it relates to a power inverter controller, a vehicle, a method, a program element and a computer readable medium.

Nowadays, the temperature surveillance of power inverters measures the temperature of a power inverter and if the temperature is higher than a certain threshold the power inverter is shut down. Normally the last temperature point is stored in a volatile memory, called the freeze frame. The freeze frames are used to debug a problem in case of a failure during operation. For a single incident the solution offers relevant information. For example, when an over temperature occurs, the freeze frame provides the information and the power inverter can be shut down. After a restart of the controller and if the temperature is below the temperature threshold the power inverter can be used again.

It is the object of the present invention to survey the temperature of a power inverter.

The present invention is defined by the subject-matter of the independent claims, wherein further embodiments are incorporated in the dependent claims and the following description.

According to a first aspect of the present invention a power inverter controller of an electrical machine of a hybrid vehicle is provided, comprising a processor, a temperature sensor, configured to measure a temperature of a power inverter and a memory, configured to store information. Wherein the memory comprises a non-volatile storage space and the processor comprises a counter. The processor is configured to increase the value of the counter, if the measured temperature is above a predetermined temperature threshold. Further, the processor is configured to store the value of the counter in the non-volatile storage space.

Thus, the processor of the power inverter controller receives in periodically intervals the temperature of a power inverter, measured by a temperature sensor. The processor may compare the measured temperature to a stored temperature threshold. The temperature threshold is stored in a non-volatile storage space of the power inverter controller and may be individually adjusted. If the measured temperature is above the threshold temperature, a counter, implemented in the processor, may be increased by an increment. The actual value of the counter can be stored in the non-volatile storage space of the power inverter controller. Until the predetermined counter threshold is reached, a misuse of the power inverter is unlikely and the warranty services persists.

A hybrid vehicle is configured to be driven by an electric machine and/or another mechanical power source e.g. an Internal Combustion Engine (ICE) . In hybrid vehicles as on conventional cars, there is the trend of maximum availability for driving. In case that one of the two engines has a malfunction, the vehicle can still be driven by the other engine. If in one engine a malfunction occurs, a malfunction indication lamp may be warning the driver. For Hybrid Electric Vehicle (HEV) the electric components of the electric drive train (HV battery, power inverter and the electric machine) can be destroyed when high temperatures are reached. This can happen when the cooling system fails and the electric machine is driven a long period in active short circuit mode or due excessive driving. When a defect is present in the cooling system, an over temperature situation can occur in the power inverter system. When electric machine is driven in active short circuit mode, the power inverter module demands to ICE to have torque request 0 Nm and speed request to 0 rpm. During this time the power inverter state is active short circuit producing continuous heating of the components of the power inverter. A hybrid vehicle can be driven by the ICE, the power inverter may run with a torque unlike zero and with a speed higher than 0 rpm, producing high temperatures inside the power inverter. In this case the power inverter controller is not able to protect the components of the power inverter. Normally a sole over temperature event of the power inverter does not lead to failure of the power inverter. Therefore, after the solvation of the problem of the cooling system, the power inverter can work but the life time performance may be reduced due to over temperature. After a certain quantity of over temperature events the power inverter can fail and the hybrid vehicle is not able to be driven in hybrid mode. However, by using the subject-matter of the present invention the over temperature events may be stored in the non-volatile storage space of the power inverter controller. The history of the temperature trend of the power inverter can be monitored and therefore it may be possible to detect a possible future failure of the power inverter. Further, it may be possible to order a new power inverter even before the failure occurs, based on the surveillance temperature data recorded by the power inverter controller, so the downtime of the power inverter and the sole machine can be reduced.

According to an embodiment of the present invention, the processor of the power inverter controller is configured to store the measured temperature values in the non-volatile storage space.

Thus, the non-volatile storage space may be used to store the value of the counter of the over temperature events and further may be configured to store the measured temperatures itself of the power inverter. Hence, a history of temperatures of the power inverter can be realised. The stored temperatures can be stored in a LOG-File on the non-volatile storage space of the power inverter controller. Further, also the absolute value of the measured temperatures may be stored. So the processor can be configured to group different types of over temperatures and give each over temperature group a different increment for increasing the counter. For example, if the temperature threshold is 100°C all temperatures over 100°C are being counted. By dividing the over temperatures in different groups it would be possible to have a first group of lightly over temperatures from 100°C to 105°C and a second group of high over temperatures over 110°C. The first group may increase the counter by the increment of, e.g. 1 and the second group by the increment of, e.g. 10. By using this type of a system it may be possible to classify the over temperature events and give each classification a different increment. By storing the temperature information in the non-volatile storage space also a later evaluation of the data is possible, e.g. if the temperature threshold value is changed over the time due to long-time experience, the counter could be adapted at the new temperature threshold value.

According to another embodiment of the present invention, the processor of the power inverter controller is configured to store the measured temperature values and the corresponding time and date in the non-volatile storage space.

Not only the temperature values are stored in the storage space, but also the date and the time of each measured temperature point. Also further vehicle information can be stored, like driving mode, environmental temperature or the status of the electrical machine. By the use of the date and time corresponding to the temperature, also the dependence between the measured temperatures of the power inverter and the environmental temperature can be analysed. So the power inverter controller is able to run statistics over the temperature under different circumstances. Further, by introducing time and date into the stored data points, also the trend of the measured temperatures can be made visible. For example, if only one measured temperature value is significantly higher or lower than the measurement taken before and after this data point, it can be a measurement error. In another case, it may be possible to analyse the duration of the over temperature events.

According to an embodiment of the present invention, the power inverter controller further comprises an interface, configured to provide the data stored in the non-volatile storage space to an external diagnosis unit.

Thus, an external diagnosis can be made by connecting a diagnosis device to the power inverter controller. The data points, including temperature, time, date and other vehicle data can be readout. Hence, it may be possible to rise statistics over the temperature characteristic of the power inverter in the field. It is further possible to compare the stored data points to other power inverters. So a continuous improvement of the controller is possible. Also it may be possible to reset the value of the counter.

According to an embodiment of the present invention, the power inverter controller further comprises a user interface, wherein the processor is configured to generate an alert signal via the user interface, if the value of the counter exceeds a predetermined counting threshold.

Thus, if the counter exceeds a certain counting threshold an alert signal can be generated by the power inverter controller and advise the user through a user interface. The user interface may be e.g. a display showing a message and /or a picture or an acoustic feedback or a tactile feedback. So the user is informed that the power inverter may fail in the near future, because the probability of a damage of the power inverter is high by reaching a certain counter threshold. In this scenario it can be advantageous to implement the embodiment with different over temperature groups, because it may be constructive to encounter a precise prediction of the failure of the power inverter.

According to another embodiment of the present invention, the power inverter controller further comprises a communication device, to send the alert signal to an external receiver.

The power inverter controller can further comprise a communication device to communicate with an external receiver. The communication can be made wireless e.g. over LTE, 3G or WiFi. An external receiver can receive the alert signal from the communication device that a predetermined counter threshold is exceeded. With this information it may be possible to order a new power inverter as a spare part or to inform the next garage to get an appointment. Further, also a live statistic can be made over power inverters in the field.

According to an aspect of the present invention a vehicle comprising a power inverter controller described forthcoming and hereinafter is provided.

The term vehicle is not alone limited to a car, but also includes trucks, buses, tractors, tanks, construction equipment and motorcycles.

Another aspect of the present invention relates to a method for temperature surveillance of a power inverter, comprising:
- measurement of the temperature of a controlled device.
- compare the temperature to a stored temperature threshold.
- increase a counter if the measured temperature is above the temperature threshold.
- store the value of the counter in a non-volatile storage space.

Thus, first the temperature of a power inverter may be measured. Then, the measured temperature may be compared to a predetermined temperature threshold. Afterwards, the value of a counter may be increased, if the measured temperature is above the temperature threshold and the value of the counter may be stored in a non-volatile storage space. The increments of increasing the counter are not forced to be equal.

An embodiment of the present invention relates to a method for temperature surveillance wherein the measured temperature values are stored in the non-volatile storage space.

Further, according to the method, described hereinbefore and hereinafter, it may be possible to store the measured temperatures in the non-volatile storage space, so that also a history of the temperatures is available. So it can be realised that different groups of over temperatures exist and give each over temperature group a different value for increasing the counter. For example, if the temperature threshold is 100°C all temperatures over 100°C are being counted. By dividing the over temperatures in different groups it would be possible to have a first group of light over temperatures from 100°C to 105°C and a second group of high over temperatures over 110°C. The first group may increase the counter by the value 1 and the second group by the value 10. By using this type of a system it may be possible to classify the over temperature events and give each classification a different value. By storing the temperature information in the non-volatile storage space also a later evaluation of the data is possible, e.g. if the temperature threshold value is changed over the time due to experience, the counter could be adapted at the new temperature threshold value. Until the predetermined counter threshold is reached, a misuse of the power inverter is unlikely and the warranty services persists.

According to an embodiment of the present invention, the method for temperature surveillance stores the measured temperature values and the corresponding time and date in the non-volatile storage space.

Not only the temperature values can be stored in the storage space, but also the date and the time of each measured temperature. By the use of the date and time corresponding to the temperature, also the dependence between the measured temperatures of the power inverter and the environmental temperature can be analysed. So it may be possible to run statistics over the measured temperatures under different circumstances. Further, by introducing time and date into the stored data points, also the trend of the measured temperatures can be made visible. For example, if only one measured temperature value is significantly higher or lower than the measurement taken before and after this data point, it could be a measurement error. In another case, it may be possible to analyse the duration of the over temperature events.

According to an embodiment of the present invention, the method for temperature surveillance provides the stored data in the non-volatile storage space to an external diagnosis unit. Thus, an external diagnosis can be made by connecting a diagnosis device to the power inverter controller. The data points, including temperature, time, date and other vehicle data can be readout. Hence, it may be possible to rise statistics over the temperature characteristic. It is further possible to compare the stored data points to other devices. Therefore, a continuous improvement of the method is possible. Also it may be possible to reset the value of the counter.

According to an embodiment of the present invention, the method for temperature surveillance generates an alert signal via the user interface, if the value of the counter exceeds a predetermined counting threshold

Thus, if the counter exceeds a certain counting threshold an alert signal can be generated and advise the user through a user interface. The user interface may be e.g. a message and /or a picture on a display, an acoustic feedback or a tactile feedback. So the user is informed that the device may fail in the near future, because the probability of a damage of the device is high by reaching a certain counter threshold. In this scenario it can be advantageous to implement different over temperature groups, because it may be constructive to encounter a precise prediction of the failure of the controlled device.

According to an embodiment of the present invention, the method for temperature surveillance sends the alert signal to an external receiver.

The method further comprises to communicate with an external receiver. The communication can be made wireless e.g. over LTE, 3G or WiFi. An external receiver can receive the alert signal that a predetermined counter threshold is exceeded. With this information it may be possible to order a new device as a spare part or to inform the next garage to get an appointment. Further, also a live statistic can be made over power inverters in the field.

According to another aspect, there is provided a computer program element controlling apparatus as previously described which, in the computer program element is executed by processing unit, is adapted to perform the method steps as previously described.

The computer program element may be part of a computer program, but it can also be an entire program by itself. For example, the computer program element may be used to update an already existing computer program to get to the present invention.

There is also provided a computer readable medium having stored the computer element as previously described.

The computer readable medium may be seen as a storage medium, such as for example, a USB stick, a CD, a DVD, a data storage device, a hard disk, or any other medium on which a program element as described above can be stored.

Advantageously, the benefits provided by any of the above aspects equally apply to all of the other aspects and vice versa.

The above aspects and examples will become apparent from and be elucidated with reference to the embodiments described hereinafter.

The figures are schematic and not to scale. Same reference signs used in the following description and in the figures, refer to these same or similar elements.

Exemplary embodiments will be described in the following with reference to the following drawings:
Fig. 1 shows a schematic diagram of a power inverter controller for temperature surveillance according to an embodiment of the present invention.
Fig. 2 shows a vehicle with a power inverter controller for temperature surveillance according to an embodiment of the present invention.
Fig. 3 shows schematic flowchart of a method of temperature surveillance of a power inverter controller according to an embodiment of the present invention.
Fig. 4 shows a more detailed flowchart of a method of temperature surveillance of a power inverter controller according to another embodiment of the present invention.

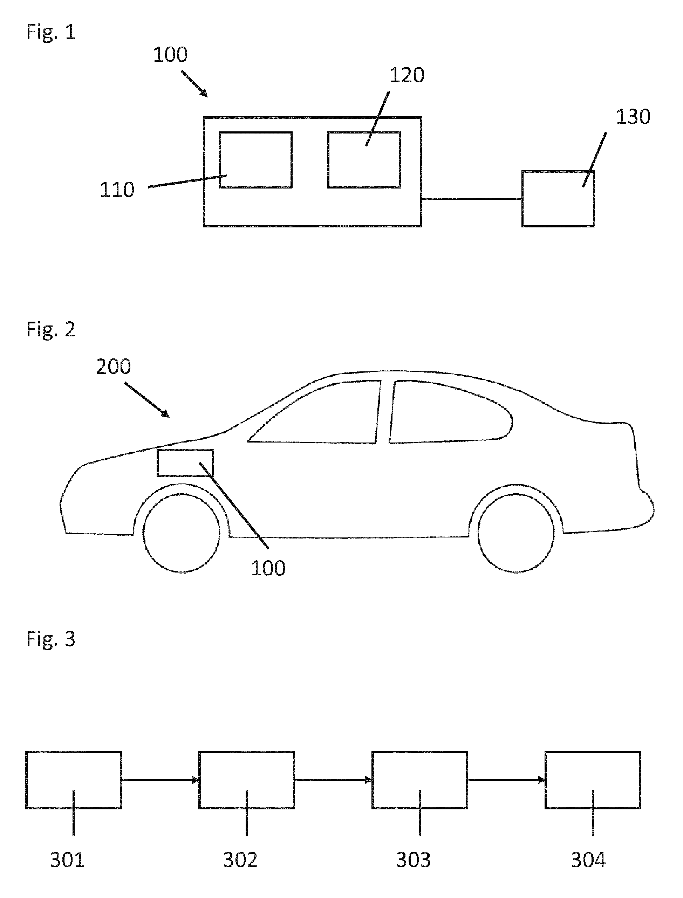

Fig. 1 shows a power inverter controller 100 comprising a processor 110, a non-volatile storage space 120 and a temperature sensor 130. The temperature sensor 130 measures the temperature of a power inverter. The processor 110 compares the temperature measured by the temperature sensor 130 with a predetermined temperature threshold, stored in the storage space 120. If the measured temperature is above the temperature threshold, the processor 110 increases a counter. The value of the counter is stored in the non-volatile storage space 120. Additionally, the non-volatile storage space 120 can store each measured temperature point including time, date and/or additional power inverter data and/or vehicle data. Further, the processor 110 compares the value of the counter with a predetermined counter threshold. If the predetermined counter threshold is exceeded, the processor 110 may be able to generate an alert signal. The alert signal can be displayed to the driver or be send to an external device. Furthermore, the power inverter controller 100 can be read out by a diagnosis unit. So the data stored in the non-volatile storage space 120 can be transferred to an external device. Until the predetermined counter threshold is reached, a misuse of the power inverter is unlikely and the warranty services persists. It is also possible to reset the value of the counter by the external device.

Fig. 2 shows a vehicle 200 which comprises a power inverter controller 100 as declared hereinbefore or hereinafter according to different embodiments.

Fig. 3 shows a flow chart of a method for temperature surveillance of a power inverter. In step 301 temperature of a controlled device is measured. Step 302 compares the measured temperature to a stored temperature threshold. In Step 303 a counter is increases, if the measured temperature is above the temperature threshold. The value of the counter is, in step 304, stored in a non-volatile storage space. The method of fig. 3 may be carried out by the power inverter controller 100 of the present invention.

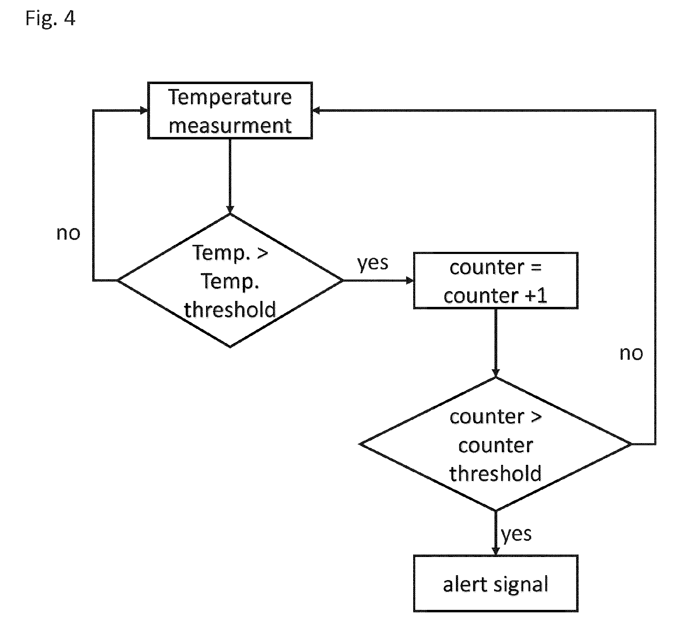

Fig. 4 shows a more precise flow chart of the method for temperature surveillance according to an embodiment of the present invention. First the temperature of a device is measured. The measured temperature will be compared to a temperature threshold. If the measured temperature is below the temperature threshold, the flowchart returns after a period of time to the initial step of measuring the temperature. If the measured temperature is above the temperature threshold, a counter is increased by a variable increment. The value of the counter will be compared to a counter threshold. If the counter is below the counter threshold, the process returns to the initial state of temperature measurement. If the counter is above the counter threshold, an alert signal is generated.

Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Where an indefinite or definite article is used when referring to a singular noun, e.g. "a", "an" or "the", this includes a plurality of that noun unless something else is specifically stated. The terms "about" or "approximately" in the context of the present invention denote an interval of accuracy that the person skilled in the art will understand to still ensure the technical effect of the feature in question.

## Claims

1. Power inverter controller of an electrical machine of a hybrid vehicle, comprising:
a processor,
a temperature sensor, configured to measure a temperature of a power inverter,
a memory configured to store information,
wherein the memory comprises a non-volatile storage space,
wherein the processor comprises a counter, and
wherein the processor is configured to increase a value of the counter, if the temperature measured by the temperature sensor is above a predetermined temperature threshold, and
wherein the processor is configured to store the value in the non-volatile storage space.

2. Power inverter controller according to claim 1,
wherein the processor is configured to store the measured temperature values in the non-volatile storage space.

3. Power inverter controller according to claim 1 or 2,
wherein the processor is configured to store the measured temperature values and the corresponding time and date in the non-volatile storage space.

4. Power inverter controller according to any one of claims 1 to 3, further comprising:
an interface, configured to provide the stored data in the non-volatile storage space to an external diagnosis unit.

5. Power inverter controller according to any one of claims 1 to 4, further comprising:
a user interface,
wherein the processor is configured to generate an alert signal via the user interface, if the value of the counter exceeds a predetermined counting threshold.

6. Power inverter controller according to any one of claims 1 to 5, further comprising:
a communication device, configured to send the alert signal to an external receiver.

7. Vehicle comprising a power inverter controller according to any one of claims 1 to 6.

8. Method for temperature surveillance of a power inverter, comprising:
measurement of the temperature of a controlled device,
compare the measured temperature to a stored temperature threshold,
increase a counter if the measured temperature is above the temperature threshold,
store the value of the counter in a non-volatile storage space.

9. Method according to claim 8,
wherein the measured temperature values are stored in the non-volatile storage space.

10. Method according to claim 8 or 9,
wherein the measured temperature values and the corresponding time and date are stored in the non-volatile storage space.

11. Method according to any one of claims 8 to 10,
wherein the stored data in the non-volatile storage space is provided to an external diagnosis unit.

12. Method according to any one of claims 8 to 11,
wherein an alert signal via the user interface is generated, if the value of the counter exceeds a predetermined counting threshold

13. Method according to any one of claims 8 to 12,
wherein the alert signal is sent to an external receiver.

14. A computer program element for controlling a power inverter controller according to any one of claims 1 to 6, which when executed by a processor is configured to carry out the method according any one of claims 8 to 13.

15. A computer readable medium, on which a computer program element according to claim 14 is stored.
